Europäisches Patentamt

European Patent Office

Office européen des brevets

(11) Veröffentlichungsnummer: **0 177 442**

A2

(12) # EUROPÄISCHE PATENTANMELDUNG

(21) Anmeldenummer: 85810345.0

(51) Int. Cl.⁴: **B 62 D 33/02**

(22) Anmeldetag: 26.07.85

(30) Priorität: 03.08.84 DE 8423065 U

(43) Veröffentlichungstag der Anmeldung:
09.04.86 Patentblatt 86/15

(84) Benannte Vertragsstaaten:
AT BE CH DE FR GB IT LI LU NL SE

(71) Anmelder: SCHWEIZERISCHE ALUMINIUM AG

CH-3965 Chippis(CH)

(72) Erfinder: Frank, Simon
Alterpostweg 4
D-7708 Watterdingen(DE)

(54) Fahrzeug mit einer Ladefläche.

(57) Ein Fahrzeug mit einer Ladefläche hat davon aufragende Aufnahmeprofile, insbesondere Eckprofile für Bordwände.

Nach einer ersten Ausführungsform ist das Aufnahmeprofil mit wenigstens einer vertikal verlaufenden Aufnahmeöffnung (24) für Halteorgane (27) von Zurrelementen oder dgl. versehen. Nach einer zweiten Ausführungsform ist die Bordwand mit wenigstens einer horizontal durchgehend verlaufenden Aufnahmeöffnung für Halteorgane von Zurrelementen oder dgl. versehen.

Fig.2

SCHWEIZERISCHE ALUMINIUM AG, CH-3965 Chippis

Fahrzeug mit einer Ladefläche

Die Erfindung betrifft ein Fahrzeug mit einer Ladefläche und davon aufragenden Aufnahmeprofilen, insbesondere Eckprofilen für Bordwände.

Im Entwurf zu den "Ladungssicherung auf Straßenfahrzeugen" betreffenden VDI-Richtlinien 2700 (VDI-Verlag GmbH, Düsseldorf, Juni 1973; Seiten 34 und 35) sind Spezial-Ladeflächen beschrieben, an deren Ringen oder Ösen Lasten mittels Seilen, Gurten oder Ketten verzurrt werden; die Last oder Ladung von Lastfahrzeugen muß vorschriftsgemäß so verstaut sein, daß jene Ladung während des Fahrbetriebs nicht verrutschen kann.

Die Verbindung von Ladefläche einerseits und ösenartigen Halteorganen anderseits kann z. B. nach dem Sonderdruck aus der "Illustrierten Zeitschrift Arbeitsschutz" (OTT-Verlag, Thun, Nr. 1-6/1976, 1/1976; Seite 26) durch auf die Ladefläche aufgesetzte Büchsen erzielt werden, in deren Bohrung bügelartige Ringe schwenkbar ruhen.

Die Nachteile derart aufgesetzter Büchsen bestehen darin, daß beim Verzurren des Ladegutes nicht die gesamte Ladefläche ausgenutzt werden kann, weil diese Büchsen in relativ großer Entfernung vom Rand angeordnet werden müssen. Außerdem sind sie nicht gegen eine Beschädigung geschützt und rufen stets Klappergeräusche hervor, wenn sie nicht durch Seile od. dgl. in einer bestimmten Lage gehalten werden. Ein weiterer Mangel liegt in der Möglichkeit der Verschmutzung, was vor dem Niederklappen der Binderinge eine umständliche Reinigung der Büchse bedingt.

Nach der DE-OS 27 57 662 kann eine Verbindung von Ladefläche und ösenartigem Halteorgan beispielsweise durch ein am Brückenrahmen befestigtes, mit dem Halteorgan kombiniertes Bordwandscharnier erzielt werden. Dieser Bindering allerdings ist ohne ein Abklappen der Bordwand nicht griffbereit und auch nicht wieder versenkbar, so daß der Gebrauch dieser Ladungssicherungsmöglichkeit mit erheblichem Aufwand verbunden ist. Zudem ist dieses Binderingscharnier nur dann einsetzbar, wenn der Käufer des Fahrzeugs seine Anordnung ausdrücklich vorsieht; eine nachträgliche Ausrüstung der Ladefläche ist wegen Überschreitung der zulässigen Gesamtbreite praktisch nicht möglich.

Denkbar wäre eine Ladungssicherung, bei der das Halteorgan ganz außen an der Ladefläche angeordnet wird und in einem Ausschnitt der Bordwand festsitzt. Nachteilig würde sich dann allerdings auswirken, daß aus der Bordwand Teile abstehen, wenn diese vom Fahrzeug abgeklappt wird. Außerdem müßte vor dem Abklappen der Bordwand das Halteorgan von seinen Seilen od.dgl. gelöst werden.

Es gibt auch Fahrzeuge, von deren Bordwänden nach außen hin Stifte abragen, um welche Seile oder andere Verzurrelemente geschlungen werden können, die anderseits mit einem Ladegut fest verbunden sind. Auch hier machen sich die Stifte als Sicherheitsrisiko bemerkbar.

Angesichts dieser Gegebenheiten hat sich der Erfinder das Ziel gesetzt, ein Fahrzeug der eingangs erwähnten Art so zu verbessern, daß an der Ladefläche keine vorspringenden Teile vorhanden sind und Halteorgane ein Abklappen der Bordwand nicht behindern. Außerdem sollen Zurrelemente möglichst variabel so anzubringen sein, daß zwischen ihnen und der Ladebordwand das Ladegut festliegt.

Zur Lösung dieser Aufgabe führt, dass das Aufnahmeprofil mit wenigstens einer vertikal verlaufenden Aufnahmeöffnung für Halteorgane von Zurrelementen od. dgl. versehen ist.

Außerdem liegt es im Rahmen der Erfindung, daß die Bordwand mit wenigstens einer horizontal durchgehend verlaufenden Aufnahmeöffnung für Halteorgane von Zurrelementen

Diese Aufnahmeöffnungen sind bevorzugt als hinterschnittene Nuten ausgebildet. Jedoch hat es sich als günstig erwiesen, die vertikale Aufnahmeöffnung des Eckprofils in einem vertikalen Formsteg dieses Eckprofils anzuordnen, welches vorteilhafterweise zwei Profilschenkel des Eckprofiles verbindet, die ihrerseits in Abstand einem anderen Schenkel eines Rinnenprofils des Eckprofils gegenüberstehen. Diese Rinnenprofile sind Teile des Eckprofiles, ihre Schenkel Verlängerungen der Wände eines Hohlprofils, welches den Kern des Endprofiles ergibt und bevorzugt rechteckigen Querschnittes ist. In diese Rinnenprofile können nun Bordwände eingelegt werden, wobei in die vertikalen Aufnahmeöffnungen der Eckprofile Bolzen von Halteösen eingeschoben werden können, die sich mit einemm Querteil, beispielsweise einem Nietkopf gegen die Innenseite des Formsteges abstützt und in beliebiger Höhe durch Zugkraft an der Öse gehalten sind.

Weitere Vorteile        und Einzelheiten der Erfindung ergeben sich aus der nachfolgenden Beschreibung
bevorzugter Ausführungsbeispiele sowie anhand der
Zeichnung; diese zeigt in

Fig. 1:   die Draufsicht auf die Ladefläche eines Kraftfahrzeuges;

Fig. 2:   ein gegenüber Fig. 1 vergrößertes und teilweise geschnittenes Detail;

Fig. 3:   einen anderen Teil eines Lastwagens im Schnitt;

Fig. 4:   ein stranggepreßtes Hohlprofil im Querschnitt.

An den Ecken einer Ladefläche 10 eines nicht weiter
dargestellten Kraftfahrzeuges sind vertikale Eckprofile
11 als Haltungen für Ladebordplanken 12 festgelegt.

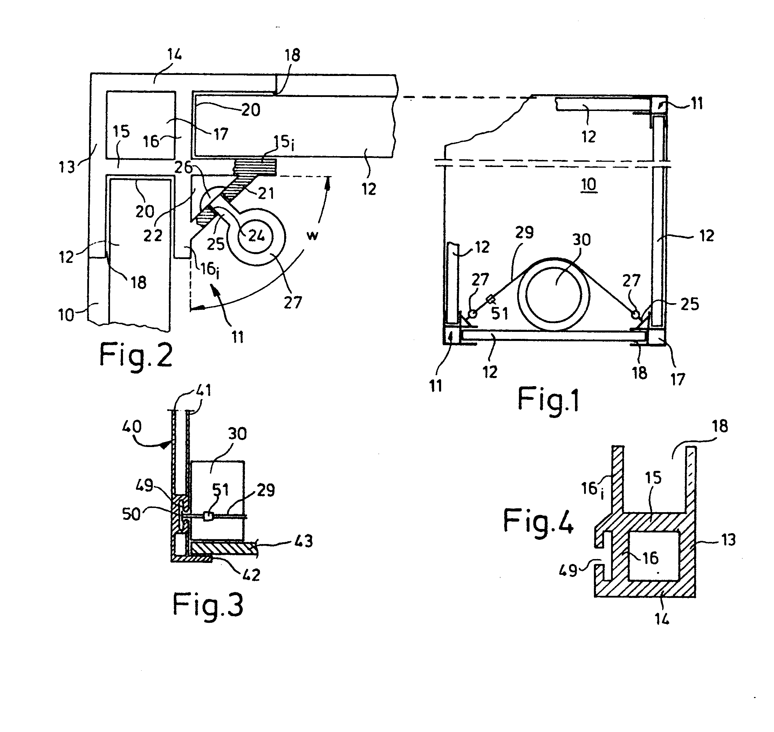

Jedes der Eckprofile 11 besteht aus einem querschnittlich quadratischen Hohlprofil mit Seitenwänden 13,14,
15,16, die einen Hohlprofilraum 17 begrenzen. Die Seitenwände 13 bis 16 sind über das Hohlprofil hinaus so verlängert, daß sie gemäß Fig. 2 zwei zueinander in einem rechten Winkel w verlaufende U-Profile mit jeweils
einer Rinnennut 18 zur Aufnahme der Stirnkanten 20 jener Bordwandplanken 12 bilden.

Die einander benachbarten inneren Schenkel $15_i$ und $16_i$
der U-Profile sind durch einen Formsteg 21 verbunden, der mit diesen Schenkeln $15_i$, $16_i$ einen Hohlraum 22 mit dem Querschnitt eines rechtwinkeligen Dreiecks begrenzt.

In diesem Formstück 21 verläuft ein Schlitz 24 zur Aufnahme von Bolzen 25, die einerseits in einem Nietkopf 26 und anderseits in einer -- gegebenenfalls offenen -- Öse 27 enden.

Gemäß Fig. 1 können dank dieser vertikal verschieblichen Öse 27 mittels Zurrseilen 29 Lasten 30 in unterschiedlicher Höhe zur Ladefläche 10 verzurrt werden.

Fig. 3 zeigt ein Bordwandprofil 40, welches entsprechend dem Eckprofil nach Fig. 2 auf dem Wege des Strangpressens aus Aluminium oder einer Aluminiumlegierung hergestellt ist. Am unteren Ende weist dieses Bordwandprofil 40 einen rechtwinklig zu dessen Wänden 41 stehenden Steg 42 als Auflage für Bodenplanken 43 auf.

Zwischen den Seitenwänden 41 des Bordwandprofils 40 läuft eine die innere Wand durchsetzende hinterschnittene Nut 49 zur Aufnahme eines Kederwulstes oder Knebels 50 eines Zurrseiles 29, welches mit längenverändernden Schlössern 51 versehen ist.

Das Eckprofil der Fig. 4 ist mit einer Rinnennut 18 versehen; statt der in Fig. 2 anderen Rinnennut 18 ist hier ebenfalls eine hinterschnittene Nut 49 vorgesehen, welches die Enden 25 der Ösen 27 oder die Knebel 50 der Zurrseile 29 aufnimmt.

PATENTANSPRUECHE

1. Fahrzeug mit einer Ladefläche und davon aufragenden Aufnahmeprofilen, insbesondere Eckprofilen für Bordwände, dadurch gekennzeichnet, dass das Aufnahmeprofil mit wenigstens einer vertikal verlaufenden Aufnahmeöffnung (24,49) für Halteorgane (27) von Zurrelementen (29) od.dgl.versehen ist.

2. Fahrzeug mit einer Ladefläche und davon aufragenden Aufnahmeprofilen, insbesondere Eckprofilen für Bordwände,dadurch gekennzeichnet, dass die Bordwand (40) mit wenigstens einer horizontal durchgehend verlaufenden Aufnahmeöffnung (49) für Halteorgane (50) von Zurrelementen (29) od.dgl. versehen ist.

3. Fahrzeug nach Anspruch 1 oder 2, dadurch gekennzeichnet, dass die Aufnahmeöffnung (49) eine hinterschnittene Nut ist.

4. Fahrzeug nach einem der Ansprüche 1 - 3, dadurch gekennzeichnet, dass die Aufnahmeöffnung (24) in einem vertikalen Formsteg (21) des Eckprofils (11) schlitzartig verläuft.

5. Fahrzeug nach einem der Ansprüche 1 bis 4, dadurch gekennzeichnet, dass der Formsteg zwei Profilschenkel $(15_i,16_i)$ verbindet, denen in Abstand jeweils ein anderer Schenkel eines Rinnenprofils des Eckprofils (11) gegenübersteht.

6. Fahrzeug nach Anspruch 1 oder 5, dadurch gekennzeichnet, dass die Schenkel der Rinnenprofilverlängerungen der Seitenwände (13 bis 16) eines den Kern des Eckprofils (11) bildenden Hohlprofiles sind.

7. Fahrzeug nach Anspruch 6, dadurch gekennzeichnet, dass das Hohlprofil bevorzugt einen rechteckigen Querschnitt aufweist.

8. Fahrzeug nach einem der Ansprüche 1 bis 7, dadurch gekennzeichnet, dass am Hohlprofil des Eckprofils (11) ein Rinnenprofil vorgesehen ist und im rechten Winkel dazu eine hinterschnittene Nut (49) verläuft.

Fig.2

Fig.1

Fig.3

Fig.4

0177442